# EUROPEAN PATENT SPECIFICATION

(11) **EP 3 448 825 B1**
(45) Date of publication and mention of the grant of the patent: **27.05.2020**
(21) Application number: 17724144.5
(22) Date of filing: 20.04.2017
(51) Int. Cl.: C04B 24/26, C04B 28/02

(54) **CEMENTITIOUS COMPOSITION COMPRISING A CLAY INSENSITIVE CONCRETE SUPERPLASTICIZER**
ZEMENTÄRE ZUSAMMENSETZUNG UMFASSEND EINEN TONUNEMPFINDLICHEN BETONVERFLÜSSIGER
COMPOSITION CIMENTAIRE COMPRENANT UN SUPERPLASTIFIANT DE BÉTON INSENSIBLE À L'ARGILE

(30) Priority: 26.04.2016 US 201662327467 P
(43) Date of publication of application: 06.03.2019
(73) Proprietor: Dow Global Technologies LLC, Midland, MI 48674 (US)
(72) Inventor: BAUMANN, Robert, 8810 Horgen (CH); POTHAYEE, Nipon, Midland, MI 48674 (US); SCHMITZ, Marc, 29699 Bomlitz (DE)
(74) Representative: Beck Greener LLP
(86) International application number: PCT/US2017/028475
(87) International publication number: WO 2017/189309

(56) References cited:
- EP-A1- 0 610 699
- EP-A1- 2 679 613
- EP-A2- 0 306 449
- WO-A1-98/58887
- DE-A1- 4 142 388
- US-A- 3 544 344
- US-A- 3 563 930
- US-A1- 2014 039 098

## Description

### BACKGROUND OF THE INVENTION

### Field of the Invention

The present invention relates to a composition comprising an esterified styrene/maleic anhydride copolymer that demonstrates superplasticizing effect with little effect by the presence of clay.

### Introduction

Polycarboxylic ethers are widely used as concrete superplasticizers. Polycarboxylic ethers are comb polymers that consist of an anionically charged backbone polymer to which polyglycol side chains are attached by covalent bonds. They adsorb on cement particle surfaces via the carboxylic groups on the backbone. The non-ionic polyether side chains tangle into solution thereby increasing the distance between cement particles and reducing the yield point of the cement paste. In most cases the polyether side chains consist of polyethylene oxide in order to provide the required water solubility for the polymers.

Concrete formulations contain aggregates that typically contain impurities such as clays. Water swellable clays tent to intercalate polyethylene oxide chains. When clays intercalate the polyethylene oxide chains on the polycarboxylic ether superplasticizers the superplasticizer loses its effectiveness. Hence, water swellable clays counteract the effectiveness of polycarboxylic ether plasticizers in concrete formulations.

US 2014/039098 or EP 2 679 613 teach solutions to counteracting the presence of water-swellable clays in cementitious compositions comprising polycarboxylate ether plasticizers.

It is desirable to identify a polycarboxylic ether that provides superplasticization of cement formulations and that shows little reduction in plasticizing effect in the presence of water swellable clay such as bentonite.

### BRIEF SUMMARY OF THE INVENTION

The present invention solves the problem of discovering a polycarboxylic ether that provides superplasticization of cement formulations and that shows little reduction in plasticizing effect in the presence of water swellable clay such as bentonite. The present invention is a result of discovering that polycarboxylic ethers made by esterifying a styrene/maleic anhydride copolymer with a specific amount and molecular weight of poly(ethylene glycol) methyl ether are a highly effective plasticizers for concrete formulations and the water swellable clay bentonite has little effect on the plasticizing effect.

In a first aspect, the present invention is a composition comprising an esterified styrene/maleic anhydride copolymer, where the esterified styrene/maleic anhydride copolymer comprises the following copolymerized components: (a) styrenic component; (b) a dicarboxylic acid ring-opened maleic anhydride; and (c) a half ester of a ring-opened maleic anhydride where the ester is a product of reacting maleic anhydride with poly(ethylene glycol) methyl ether having a number-average molecular weight in a range of 100 to 800 grams per mole, where the molar ratio of component (c) to component (b) is greater than 0.5 as determined by nuclear magnetic resonance spectroscopy, and the molar ratio of component (a) to the sum of components (b) and (c) is 1.0 or more and 2.0 or less as determined by nuclear magnetic resonance spectroscopy.

The composition of the present invention is useful, for example, as a plasticizer for concrete or for a plasticized concrete composition or for gypsum slurries used for the production of gypsum wall boards.

### DETAILED DESCRIPTION OF THE INVENTION

"And/or" means "and, or alternatively". All ranges include endpoints unless otherwise stated. Test methods refer to the most recent test method as of the priority date of this document unless a date is indicated with the test method number as a hyphenated two digit number. References to test methods contain both a reference to the testing society and the test method number. Test method organizations are referenced by one of the following abbreviations: ASTM refers to ASTM International (formerly known as American Society for Testing and Materials); EN refers to European Norm; DIN refers to Deutsches Institut für Normung; and ISO refers to International Organization for Standards.

Unless otherwise stated, determine number-average molecular weight (Mn) of polymers and copolymers using gel permeation chromatography (GPC) on an Agilent 1100 series liquid chromatography system equipped with an Agilent 100 series refractive index and MiniDAWN light scattering detector (Wyatt Technology Co.). Dissolve samples in high pressure liquid chromatography grade tetrahydrofuran at a concentration of approximately one milligram per milliliter and filter through a 0.20 micrometer syringe filter before injection through the two PLGel 300x7.5 millimeter Mixed C columns (5 millimeter, Polymer Laboratories, Inc.). Maintain a flow rate of one milliliter per minute and temperature of 35 degrees Celsius (°C). Calibrate the columns with narrow molecular weight polystyrene standards (EasiCal PS-2, Polymer Laboratories, Inc.).

The present invention is a composition comprising an esterified styrene/maleic anhydride (SMA) copolymer. The esterified SMA copolymer comprises, and can consist of: (a) a styrenic component; (b) a dicarboxylic acid ring-opened maleic anhydride component; and (c) a half ester of a ring-opened maleic anhydride component.

The molar ratio of half ester of a ring-opened maleic anhydride component ("component (c)") to dicarboxylic acid ring-opened maleic anhydride component ("component (b)") is greater than 0.5, more preferably 0.57 or more and even more preferably 1.0 or more. There is no upper limit on this molar ratio since the compound can be fully esterified. However, the molar ratio of half ester of a ring-opened maleic anhydride component ("component (c)") to dicarboxylic acid ring-opened maleic anhydride component ("component (b)") can be 2.0 or less, 1.8 or less, 1.5 or less, 1.3 or less, 1.2 or less, 1.1 or less or 1.0 or less. Determine the molar ratio by nuclear magnetic resonance (NMR) spectroscopy.

The molar ratio of the styrenic component ("component (a)") to the sum of components (b) and (c) is 1.0 or more and at the same time is 2.0 or less, preferably 1.9 or less and even more preferably 1.8 or less and can be 1.7 or less, 1.6 or less, 1.5 or less, 1.4 or less, 1.3 or less, 1.2 or less and even 1.1 or less. Determine the molar ratio by nuclear magnetic resonance (NMR) spectroscopy.

The styrenic component generally has the following structure (I):

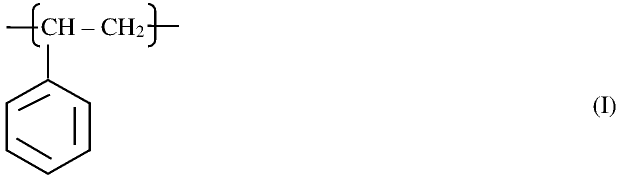

Each styrenic component is connected to another styrenic component, a dicarboxylic acid ring-opened maleic anhydride component and/or a half ester of a ring-opened maleic anhydride. A styrenic component is believed to be a terminal group of the SMA copolymer in which case the terminal styrenic unit is linked to a hydrogen in addition to one of the other components listed above.

The dicarboxylic acid ring-opened maleic anhydride component has the following structure (II): 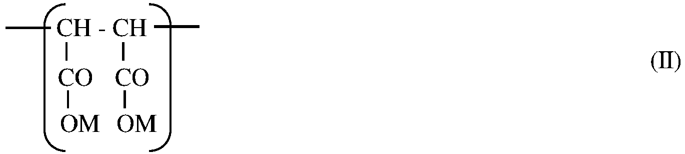 where M is selected from a group consisting of hydrogen or a cation. The cation is generally selected from a group consisting of alkali metal cations and ammonium. Each dicarboxylic acid ring-opened maleic anhydride component is connected to a styrenic component, another dicarboxylic acid ring-opened maleic anhydride component and/or a half ester of a ring-opened maleic anhydride.

The half ester of a ring-opened maleic anhydride component has the following structure (III) : 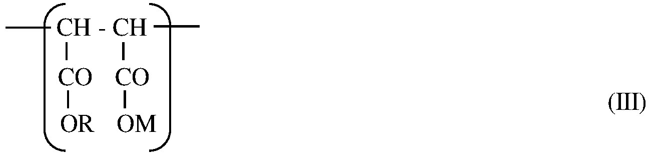 where M is as described for structure (II) and R is a poly(ethylene glycol) methyl group having the following structure (IV):

-[-CH₂CH₂O]ₙ-CH₃ (IV)

where n represents the average number of CH₂CH₂O units ("EO units") in the structure. Desirably, n is a value of one or more, preferably 1.5 or more, more preferably 8 or more and most preferably 10.5 or more while at the same time is desirably 18 or less, preferably 15 or less and most preferably 13 or less.

The esterified SMA copolymer is a reaction product of SMA copolymer with poly(ethylene glycol) methyl ether ("MPEG"). The SMA copolymer has a molar ratio of styrene component to maleic anhydride component as previously described for the molar ratio of component (a) to the sum of components (b) and (c). The MPEG desirably has a number-average molecular weight (Mn) of 100 grams per mole (g/mol) or more (an average of 1.5 EO units per molecule or more), more preferably 400 g/mol or more (an average of 8.4 EO units per molecule or more), and yet more preferably 500 g/mol or more (an average of 10.6 EO units per molecule or more) while at the same time desirably has a number-average molecular weight of 800 g/mol or less (an average of 17.5 EO units per molecule or less), preferably 700 g/mol or less (an average of 15.2 EO units per molecule or less) and even more preferably 600 g/mol or less (an average of 13 EO units per molecule or less).

The esterified SMA copolymer desirably has a number-average molecular weight of 1000 g/mol or more, preferably 2000 g/mol or more and still more preferably 3000 g/mol or more and at the same time desirably has a number-average molecular weight of 6000 g/mol or less, preferably 5000 g/mol or less and more preferably 4000 g/mol or less.

The composition of the present invention is typically an aqueous composition. In that regard water is typically present. The concentration of SMA copolymer in the composition is desirably 20 weight-percent (wt%) or more, preferably 25 wt% or more and can be 30 wt% or more, 35 wt% or more, 40 wt% or more and even 45 wt% or more while at the same time is generally 50 wt% or less can be 45 wt% or less, and even 40 wt% or less with wt% relative to total weight of SMA copolymer and water.

The concentration of SMA copolymer in a concrete composition is typically 0.01 wt% or more, preferably 0.03 wt% or more, more preferably 0.05 wt% or more, yet more preferably 0.08 wt% or more and can be 0.1 wt% or more, 0.2 wt% or more, 0.3 wt% or more, 0.4 wt% or more and even 0.5 wt% or more while at the same time is typically 10 wt% or less, preferably 5 wt% or less, more preferably one wt% or less and can be 0.8 wt% or less, 0.6 wt% or less, 0.4 wt% or less, 0.2 wt% or less, 0.1 wt% or less, 0.09 wt% or less with wt% relative to cement weight in the concrete composition.

The composition of the present invention desirably comprises at least one other component in addition to the esterified SMA copolymer. The esterified SMA copolymer has demonstrated a surprising and unexpected ability to plasticize an aqueous formulation with minimal impact by the presence or addition of clay. Such an insensitivity to clay is valuable for cement formulations where clay can be present as an impurity.

A particularly desirable composition of the present invention further comprises water and a clay component. The term "clay" refers to aluminum and/ or magnesium silicates, including phyllosilicates having a lamellar structure, as well as other types of clays such as amorphous clays. The clays include 2:1 type (such as smectite type clays) and 1:1 type clays (such as kaolinite) and 2:1:1 type (such as chlorite). The clay can be bentonite, an aluminum phyllosilicate clay consisting mostly of montmorillonite.

The clay can be present at concentration of 0.01 wt% or more, 0.02 wt% or more 0.03 wt% or more, 0.04 wt% or more even 0.05 wt% or more and at the same time is generally present at a concentration of 3 wt% or less, preferably one wt% or less and can be 0.08 wt% or less, 0.05 wt% or less or 0.04 wt% or less or 0.03 wt% or less with wt% relative to total solids weight (weight of all components other than water) of the composition. Determine concentration of clay in using a methylene blue test according to DIN EN 933-9 (Beuth-Verlag, Berlin).

The composition of the present invention can be a cement composition that comprises water and clay (as described in the prior paragraph) as well as one or more than one component selected from a group consisting of cement and sand. For example, the composition can be a concrete formulation that comprises dry component and water. The dry components include cement (a hydraulic binder) and filler (sand and gravel). Sand contains particles having a size smaller than two millimeters in average size and gravel has particles of two millimeters or larger. Determine particle size using mechanical sieves.

The cement component, if present, is generally present at a concentration of one wt% or more, preferably two wt% or more, more preferably three wt% or more and can be five wt% or more, eight wt% or more, even 10 wt% or more, 20 wt% or more, 30 wt% or more or 35 wt% or more while at the same time is typically present at a concentration of 50 wt% or less, preferably 40 wt% or less, and can be 35 wt% or less with wt% relative to total dry component weight in the composition.

The sand component, if present is generally present at a concentration of 10 wt% or more, preferably 20 wt% or more, more preferably 30 wt% or more and can be 40 wt% or more, 50 wt% or more, 60 wt% or more and even 65 wt% or more while at the same time is typically 80 wt% or less, preferably 70 wt% or less and can be 65 wt% or less with wt% relative to total dry component weight in the composition.

### Examples

The following examples illustrate the effectiveness as a plasticizer and the insensitivity of examples of esterified SMA copolymer of the present invention to the presence of clay in an aqueous composition. Effectiveness as a plasticizer is evident from results of the "Slump Test". Sensitivity to clay is evident by evaluating how effective a copolymer is as a plasticizer in the Slump Test in formulations with and without clay. It is desirable to have a "slump value" of 260 millimeters (mm) or more, preferably 270 mm or more, still more preferably 280 mm or more both with and without clay present. It is desirable that the slump value with clay is no more than 6%, preferably no more than 5%, still more preferably no more than 4% and even more preferably no more than 3% different from the slump value of the same composition without clay.

**Slump Test.** The Slump Test is a measure of how much a composition is able to flow under its own weight plus 15 strokes according to DIN EN 1015-3:2007-5 (Beuth Verlag GmbH, Berlin, Germany). In general, the Slump Test involves placing a cone funnel having a bottom opening diameter of 100 millimeters (mm), a top opening diameter of 70 mm and a height of 60 mm onto a wetted glass plate (wetted 10 seconds before testing) with the bottom opening on the plate. The cone funnel is filled with a composition to be evaluated and then the cone is quickly pulled in the vertical direction off from the plat to fully release the composition onto the plate followed immediately by applying 15 strokes to the composition. Once the composition ceases to spread, measure the diameter of the composition in millimeters (mm) at four places equally spaced around the composition. The average of the four diameters is the "slump value" for the composition. Larger slump values correspond to greater plasticization.

### Plasticizers

The following examples examine two commercially available plasticizers and 13 custom polycarboxylic ether plasticizers. The two commercially available plasticizers are GLENIUM™ 51 polycarboxylic ether based plasticizer (1000 g/mol MPEG side chains with 38 molar percent esterification) and MELCRET™ 500L superplasticizer for concrete (a sulfonated polycondensation product base on naphthalene in liquid form - 40 weight-percent solids). GLENIUM is a trademark of Construction Research & Technology GmbH. MELCRET is a trademark of SKW Polymers GmbH.

The custom polycarboxylic ether plasticizers fall within one of four compositions:
(1) SMA esterified with poly(ethylene glycol) methyl ether ("MPEG-SMA");
(2) SMA esterified with O-2-aminipropyl)-o'-(2-methoxyethyl)propylene glycol ("PPG-g-SMA");
(3) Poly(methacrylic acid) esterified with poly(ethylene glycol) methyl ether ("MPEG-PMA"); and
(4) Poly(methacrylic acid) esterified with O-2-aminipropyl)-o'-(2-methoxyethyl)propylene glycol ("PMA-g-SMA").

***Solution Synthesis of MPEG-SMA.*** Into a 50 milliliter (mL) round bottom flask add 5.0 grams (g) of poly(maleic anhydride-co styrene) ("SMA A" having a number average molecular weight (Mn) of 3420 g/mol and a molar ratio of styrene to maleic anhydride of 1:1) and the appropriate amount of MPEG to achieve the target grafting ratio per Table 1 and dissolve in 30 mL of dimethylformamide to give a yellow solution. Stir the solution at 45 degrees Celsius (°C) for five hours. Precipitate the MPEG-SMA from hexane, filter and dry under vacuum at 60°C for 24 hours. Prepare 40 wt% solutions of the MPEG-SMA for use in the experiments below. Prepare MPEG-SMA A1 (see Table 1) according to this Solution Synthesis method.

***Bulk Synthesis of MPEG-SMA.*** Prepare MPEG-SMA by a bulk synthesis process using four different styrene maleic anhydride (SMA) copolymers that differ in the amount of styrene:maleic anhydride ratios:
"SMA A" (Mn of 3420 g/mol and molar ratio of styrene to maleic anhydride of 1:1)
"SMA B" (Mn of 2000 g/mol and molar ratio of styrene to maleic anhydride of 1:1)
"SMA C" (Mn of 3000 g/mol and molar ratio of styrene to maleic anhydride of 2:1)
"SMA D" (Mn of 3800 g/mol and molar ratio of styrene to maleic anhydride of 3:1).

Add MPEG with the required molecular weight as indicated in Table 1 to a 1-L, 4-neck round bottom flask fitted with overhead stirring (300 revolutions per minute), with a vacuum set up, distillation head, thermocouple and cold trap for the distillate. Use sufficient MPEG so as to achieve the grafting ratio as listed in Table 1. To assure uniform heating, use an insulated heating mantle on a Jack-O-Matic™ lab jack during the evaporative and esterification process. Add SMA polymer at 70 °C and increase the temperature to 180 °C under 254 millimeters mercury vacuum. The total amount of MPEG and SMA should be in the range of 200 g ± 20 g. After 3 hours, cool the reaction to 85 °C. Adjust he final pH (to 6-6.5) and solids (to 40%), except for MPEG-SMA D1 (17.5 wt% solution) and MPEG-SMA D2 (19 wt% solution). The latter two have particularly low water solubililties so less solids could be dissolved into the solutions.

Prepare 12 different MPEG-SMA copolymers (MPEG-SMA A2 to MPEG-SMA D2) using the above synthesis with the SMA noted in the copolymer name in Table 1.

The resulting MPEG-SMA copolymers have the following characteristics:

**Table 1**

| **Copolymer** | **MPEG Mn** (g/mol) | **Grafting Ratio*** |
|---|---|---|
| MPEG-SMA A1 | 550 | 0.57 |
| MPEG-SMA A2 | 550 | 0.67 |
| MPEG-SMA A3 | 1000 | 0.67 |
| MPEG-SMA A4 | 1000 | 1.5 |
| MPEG-SMA A5 | 2000 | 0.67 |
| MPEG-SMA B1 | 550 | 0.5 |
| MPEG-SMA B2 | 550 | 1.0 |
| MPEG-SMA B3 | 550 | 2.0 |
| MPEG-SMA B4 | 550 | Fully esterified** |
| MPEG-SMA C1 | 550 | 1.0 |
| MPEG-SMA C2 | 550 | Fully esterified** |
| MPEG-SMA D1 | 550 | 1.0 |
| MPEG-SMA D2 | 550 | Fully esterified** |

| | | |
|---|---|---|
| * Grafting Ratio is the molar ratio of maleic half ester to maleic diacid as determined by NMR ** Fully esterified means there is no measurable maleic diacid present. | | |

***Synthesis of PPG-g-SMA.*** Into a 50 milliliter (mL) round-bottom flask dissolve 5.0 grams (g) of poly(maleic anhydride-co-styrene) and appropriate amount of O-(2-aminopropyl)-o'-(2-methoxyethyl)propylene glycol to achieve the target grafting ratio per Table 2 into dimethylformamide to give a yellow solution. Use enough dimethylformamide to achieve the percent solids (% solids) indicated in Table 2. The poly(maleic anhydride-co-styrene) has a number average molecular weight of 3520 g/mol and molar ratio of styrene to maleic anhydride groups of one. Stir the yellow solution at 45 degrees Celsius (°C) for five hours. Precipitate the resulting PPG-g-SMA polymer from hexane and isolate by filtration and drying under vacuum at 60°C for 24 hours. The PPG-g-SMA copolymers are soluble in water and various solutions were prepared (see Table 2). The aqueous phase of the dispersed polymers has a pH of 7.6. Increase the pH value as to achieve the pH of 10 for PPG-g-SMA copolymers 1, 4 and 5 by adding 0.1 Normal sodium hydroxide solution. Measure pH using a Paortamess 912 pH meter from Knick (Knick Elektronische Messgräte GmbH & Co. KG, Berlin).

**Table 2**

| **Copolymer** | **Grafting Ratio** | **% Solids** | **pH** |
|---|---|---|---|
| PPG-g-SMA A1 | 0.25 | 32 | 10 |
| PPG-g-SMA A2 | 0.11 | 15 | 7.6 |
| PPG-g-SMA A3 | 0.5 | 15 | 7.6 |
| PPG-g-SMA A4 | 0.11 | 10 | 10 |
| PPG-g-SMA A5 | 0.5 | 10 | 10 |

***Synthesis of MPEG-PMA.*** Add 34 g poly(methacrylic acid) having a Mn of 2400 g/mol and 42% solids in water and 29.5 g poly(ethylene glycol) methyl ether (550 g/mol Mn) to a 200 mL 4-neck round bottom flask fitted with overhead stirring, nitrogen inlet bubbler (keep contents under a nitrogen blanket), distillation head, thermocouple and a cold trap. Heat the solution to 160-180°Cwhil mixing at 300 revolutions per minute for 4-5 hours. Cool the solution to 80°C to obtain a 40-50 wt% aqueous solution of MPEG-PMA. The resulting MPEG-PMA has a Grafting Ratio of 0.42.

***Synthesis of PPG-g-PMA.*** Prepare in like manner as MPEG-PMA except use 32 g of O-(2-aminopropyl)-o'-(2-methoxyethyl)propylene glycol instead of 29.5 g of MPEG. The resulting PPG-g-SMA has a grafting ratio of 0.42.

### Performance Evaluation

Slump Test evaluations are done using cement compositions both with and without clay. The cement compositions without clay consist of 500 g cement (OPC CEM 142.5 R; HDX/Ennigerloh Nord), 500 g quarzsand H32, 600 g sand (particle size 0.2-1 mm), 400 g sand (particle size 1-2 mm), 1.9 g of plasticizer solids and 288.10 g water. The cement composition with clay further contains 8 g of bentonite.

GLENIUM 51 plasticizer, MELCRET 500L plasticizer and PPG-g-SMA A1-A5 copolymers are all in aqueous solution. Therefore, to obtain 1.9 g of plasticizer solids, the compositions contain 5.00 g of GLENIUM 51 plasticizer (38% solids), 4.75 g MELCRET 500L plasticizer (40% solids), 6.00 g PPG-g-SMA A1 (32% solids), 12.67 g PPG-g-SMA A2 (15% solids), 12.67 g PPG-g-SMA A3 (15% solids), 19.00 g PPG-g-SMA A4 (10% solids) or 19.00 g PPG-g-SMA A5 (10% solids). The remaining plasticizers are 100% solids so compositions contain 1.9 g of the plasticizer.

Slump values for the compositions are provided in Table 3. Compositions with GLENIUM 51 and MELCRET 500L plasticizers were evaluated four different times and Comp Ex C was evaluated two different times.

**Table 3**

| **Example** | **Plasticizer** | **Slump Value w/o Clay** (mm) | **Slump Value w/ Clay** (mm) | **% Difference** |
|---|---|---|---|---|
| Example 1 | MPEG-SMA A1 | 295 | 280 | 5 |
| Example 2 | MPEG-SMA A2 | 300 | 283 | 6 |
| Comp Example 3 | MPEG-SMA A3 | 282 | 269 | 5 |
| Comp Example 4 | MPEG-SMA A4 | 280 | 271 | 3 |
| Comp Example 5 | MPEG-SMA A5 | 267 | 260 | 3 |
| Comp Ex J | MPEG-SMA B 1 | 300 | 267 | *11* |
| Example 7 | MPEG-SMA B2 | 300 | 280 | 7 |
| Example 8 | MPEG-SMA B3 | 300 | 285 | 5 |
| Example 9 | MPEG-SMA B4 | 300 | 279 | 7 |
| Example 10 | MPEG-SMA C1 | 284 | 263 | 7 |
| Example 11 | MPEG-SMA C2 | 300 | 278 | 7 |
| Comp Ex K | MPEG-SMA D 1 | 256 | *233* | 9 |
| Comp Ex L | MPEG-SMA D2 | 276 | *254* | 8 |
| Comp Ex A | GLENIUM 51 Plasticizer | 273 | 231 | 15 |
| | | 260 | 229 | 12 |
| | | 262 | 208 | 21 |
| | | 300 | 214 | 29 |
| Comp Ex B | MELCRET 500L Plasticizer | 261 | 211 | 19 |
| | | 246 | 197 | 20 |
| | | 244 | 210 | 14 |
| | | 248 | 210 | 15 |
| Comp Ex C | PPG-g-SMA A1 | 255 | 244 | 4 |
| | | 255 | 244 | 4 |
| Comp Ex D | PPG-g-SMA A2 | 240 | 230 | 4 |
| Comp Ex E | PPG-g-SMA A3 | 261 | 239 | 8 |
| Comp Ex F | PPG-g-SMA A4 | 245 | 222 | 9 |
| Comp Ex G | PPG-g-SMA A5 | 252 | 234 | 7 |
| Comp Ex H | MPEG-PMA | 277 | 212 | 23 |
| Comp Ex I | PPG-g-PMA | 246 | 229 | 7 |

**Table 4: Structural Properties of all plasticizers**

| **Example** | **Plasticizer** | SMA Mn | Mole Ratio styrene/ MAH | Mole% half ester | Mole% diacid | Mole Ratio half-ester/ diacid | Poly glycol Mn |
|---|---|---|---|---|---|---|---|
| Example 1 | MPEG-SMA A1 | 3420 | 1:1 | 36.3 | 63.7 | 0.57 | 550 |
| Example 2 | MPEG-SMA A2 | 3420 | 1:1 | 40.0 | 60.0 | 0.67 | 550 |
| Comp Example 3 | MPEG-SMA A3 | 3420 | 1:1 | 40.0 | 60.0 | 0.67 | 1000 |
| Comp Example 4 | MPEG-SMA A4 | 3420 | 1:1 | 60.0 | 40.0 | 1.5 | 1000 |
| Comp Example 5 | MPEG-SMA A5 | 3420 | 1:1 | 40.0 | 60.0 | 0.67 | 2000 |
| Comp Ex J | MPEG-SMA B 1 | 2000 | 1:1 | 33.3 | 66.7 | 0.5 | 550 |
| Example 7 | MPEG-SMA B2 | 2000 | 1:1 | 50.0 | 50.0 | 1.0 | 550 |
| Example 8 | MPEG-SMA B3 | 2000 | 1:1 | 66.7 | 33.3 | 2.0 | 550 |
| Example 9 | MPEG-SMA B4 | 2000 | 1:1 | 100 | 0 | Fully esterified | 550 |
| Example 10 | MPEG-SMA C1 | 3000 | 2:1 | 50.0 | 50.0 | 1.0 | 550 |
| Example 11 | MPEG-SMA C2 | 3000 | 2:1 | 100 | 0 | Fully esterified | 550 |
| Comp Ex K | MPEG-SMA D 1 | 3800 | 3:1 | 50.0 | 50.0 | 1.0 | 550 |
| Comp Ex L | MPEG-SMA D2 | 3800 | 3:1 | 100 | 0 | Fully esterified | 550 |
| Comp Ex A | GLENIUM 51 Plasticizer | n.a. | n.a. | n.a. | n.a. | n.a. | 1000 |
| Comp Ex B | MELCRET 500L Plasticizer | n.a. | n.a. | n.a. | n.a. | n.a. | n.a. |
| Comp Ex C | PPG-g-SMA A1 | 3420 | 1:1 | 20.0 | 80.0 | 0.25 | 600 |
| Comp Ex D | PPG-g-SMA A2 | 3420 | 1:1 | 10.0 | 90.0 | 0.11 | 600 |
| Comp Ex E | PPG-g-SMA A3 | 3420 | 1:1 | 33.3 | 66.7 | 0.5 | 600 |
| Comp Ex F | PPG-g-SMA A4 | 3420 | 1:1 | 10.0 | 90.0 | 0.11 | 600 |
| Comp Ex G | PPG-g-SMA A5 | 3420 | 1:1 | 33.3 | 66.7 | 0.5 | 600 |
| Comp Ex H | MPEG-PMA | n.a. | n.a. | n.a. | n.a. | n.a. | 550 |
| Comp Ex I | PPG-g-PMA | n.a. | n.a. | n.a. | n.a. | n.a. | 600 |

| | | | | | | | |
|---|---|---|---|---|---|---|---|
| n.a. not applicable SMA styrene maleic anhydride copolymer MAH maleic anhydride | | | | | | | |

The data in Table 3 reveals that only the MPEG-SMA plasticizer having a grafting ratio greater than 0.5 (compare to Comp Ex J at 0.5 to Ex 1 at 0.57) and a molar ratio of styrene to maleic anhydride that is 1 or more and less than 3 (compare to Comp Exs K and L) achieves a slump value of 260 mm or more when clay is present in the composition and at the same time shows little sensitivity to the presence of clay as illustrated by all having a 7% or less difference in slump value between composition with and without clay. Increasing the grafting ratio (ratio of half ester to diacid) from 1.0 to fully esterified polymers has no effect on the plasticization. The high clay tolerance remains unaffected (compare Ex 7 to 11).

The high plasticization effectiveness (high slump value) and the low sensitivity to the presence of clay make these MPEG-SMA plasticizers surprisingly and unexpectedly more effective and more consistent plasticizers than the other plasticizers.

Lower Mn MPEG materials provide greater plasticization than higher Mn MPEG materials as is evidenced by comparing results for copolymers MPEG-SMA A3, A4 and A5. These copolymers differ only in the Mn of the MPEG side chain and the slump results reveal that increasing MPEG Mn in this series results in lower slump values (lower plasticization).

## Claims

1. A composition comprising an esterified styrene/maleic anhydride copolymer, a water swellable clay and at least one component selected from a group consisting of cement and sand, where the esterified styrene/maleic anhydride copolymer comprises the following copolymerized components: (a) a styrenic component; (b) a dicarboxylic acid ring-opened maleic anhydride; and (c) a half ester of a ring-opened maleic anhydride where the ester is a product of reacting maleic anhydride with poly(ethylene glycol) methyl ether having a number-average molecular weight in a range of 100 to 800 grams per mole, where the molar ratio of component (c) to component (b) is greater than 0.5 as determined by nuclear magnetic resonance spectroscopy, and the molar ratio of component (a) to the sum of components (b) and (c) is 1.0 or more and 2.0 or less as determined by nuclear magnetic resonance spectroscopy.

2. The composition of Claim 1, wherein the molecular weight of the poly(ethylene glycol) methyl ether is in a range of 400 to 700.

3. The composition of Claim 1, wherein the molecular weight of the poly(ethylene glycol) methyl ether is in a range of 500 to 600.

4. The composition of any previous claim, wherein the molar ratio of component (c) to component (b) is in a range of 1 to 2.

5. The composition of any previous claim, wherein the esterified styrene/maleic anhydride copolymer consists of components (a), (b) and (c).

6. The composition of Claim 1, wherein the water swellable clay includes bentonite.

## Patentansprüche

1. Eine Zusammensetzung, beinhaltend ein verestertes Styrol/Maleinsäureanhydrid-Copolymer, einen in Wasser quellfähigen Ton und mindestens eine Komponente, die ausgewählt ist aus einer Gruppe, bestehend aus Zement und Sand, wobei das veresterte Styrol/Maleinsäureanhydrid-Copolymer die folgenden copolymerisierten Komponenten beinhaltet: (a) eine Styrolkomponente; (b) ein ringgeöffnetes Dicarbonsäure-Maleinsäureanhydrid; und (c) einen Halbester eines ringgeöffneten Maleinsäureanhydrids, wobei der Ester ein Produkt aus einer Reaktion von Maleinsäureanhydrid mit Poly(ethylenglykol)-Methylether ist, der ein Zahlenmittel des Molekulargewichts in einem Bereich von 100 bis 800 Gramm pro Mol aufweist, wobei das Molverhältnis von Komponente (c) zu Komponente (b) größer ist als 0,5, wie durch Kernspinresonanzspektroskopie bestimmt, und das Molverhältnis von Komponente (a) zu der Summe von Komponenten (b) und (c) 1,0 oder mehr und 2,0 oder weniger ist, wie durch Kernspinresonanzspektroskopie bestimmt.

2. Zusammensetzung gemäß Anspruch 1, wobei das Molekulargewicht des Poly(ethylenglykol)-Methylethers in einem Bereich von 400 bis 700 liegt.

3. Zusammensetzung gemäß Anspruch 1, wobei das Molekulargewicht des Poly(ethylenglykol)-Methylethers in einem Bereich von 500 bis 600 liegt.

4. Zusammensetzung gemäß einem vorhergehenden Anspruch, wobei das Molverhältnis von Komponente (c) zu Komponente (b) in einem Bereich von 1 bis 2 liegt.

5. Zusammensetzung gemäß einem vorhergehenden Anspruch, wobei das veresterte Styrol/Maleinsäureanhydrid-Copolymer aus Komponenten (a), (b) und (c) besteht.

6. Zusammensetzung gemäß Anspruch 1, wobei der in Wasser quellfähige Ton Bentonit umfasst.

## Revendications

1. Une composition comprenant un copolymère de styrène/anhydride maléique estérifié, une argile gonflable dans l'eau et au moins un composant sélectionné dans un groupe constitué du ciment et du sable, où le copolymère de styrène/anhydride maléique estérifié comprend les composants copolymérisés suivants : (a) un composant styrénique ; (b) un anhydride maléique à cycle ouvert acide dicarboxylique ; et (c) un demi-ester d'un anhydride maléique à cycle ouvert où l'ester est un produit d'une réaction d'un anhydride maléique avec un éther méthylique de poly(éthylène glycol) ayant une masse moléculaire moyenne en nombre comprise dans un intervalle de 100 à 800 grammes par mole, où le rapport molaire du composant (c) au composant (b) est supérieur à 0,5 tel que déterminé par spectroscopie de résonance magnétique nucléaire, et le rapport molaire du composant (a) à la somme des composants (b) et (c) est 1,0 ou plus et 2,0 ou moins tel que déterminé par spectroscopie de résonance magnétique nucléaire.

2. La composition de la revendication 1, dans laquelle la masse moléculaire de l'éther méthylique de poly(éthylène glycol) est comprise dans un intervalle de 400 à 700.

3. La composition de la revendication 1, dans laquelle la masse moléculaire de l'éther méthylique de poly(éthylène glycol) est comprise dans un intervalle de 500 à 600.

4. La composition de n'importe quelle revendication précédente, dans laquelle le rapport molaire du composant (c) au composant (b) est compris dans un intervalle de 1 à 2.

5. La composition de n'importe quelle revendication précédente, dans laquelle le copolymère de styrène/anhydride maléique estérifié est constitué des composants (a), (b) et (c).

6. La composition de la revendication 1, dans laquelle l'argile gonflable dans l'eau inclut la bentonite.
